# EUROPEAN PATENT SPECIFICATION

(11) **EP 2 979 434 B1**
(45) Date of publication and mention of the grant of the patent: **19.07.2017**
(21) Application number: 14713463.9
(22) Date of filing: 27.03.2014
(51) Int. Cl.: H04L 29/12

(54) **METHOD AND SYSTEM FOR ASSIGNING A LOCATION-BASED ADDRESS TO A NETWORK-NODE**
VERFAHREN UND SYSTEM ZUR ZUTEILUNG EINER STANDORTBASIERTEN ADRESSE FÜR EIN NETZKNOTEN
PROCÉDÉ ET SYSTÈME D'ATTRIBUTION D'ADRESSE BASÉE SUR LA LOCALISATION À UN NOEUD RÉSEAU

(30) Priority: 29.03.2013 EP 13161833
(43) Date of publication of application: 03.02.2016
(73) Proprietor: Televic Rail NV, 8870 Izegem (BE)
(72) Inventor: LAMBRECHT, Jürgen, B-8200 Sint-Andries (BE)
(74) Representative: DenK iP
(86) International application number: PCT/EP2014/056205
(87) International publication number: WO 2014/154826

(56) References cited:
- WO-A1-2009/013674
- DE-A1- 19 733 906
- US-A1- 2004 064 559
- US-A1- 2010 274 945
- US-A1- 2012 215 874

## Description

### Field of the invention

The present invention is generally related to the field of techniques for distributing with a server device logical network addresses to a group of client devices connected with point-to-point links in a mesh network.

### Background of the invention

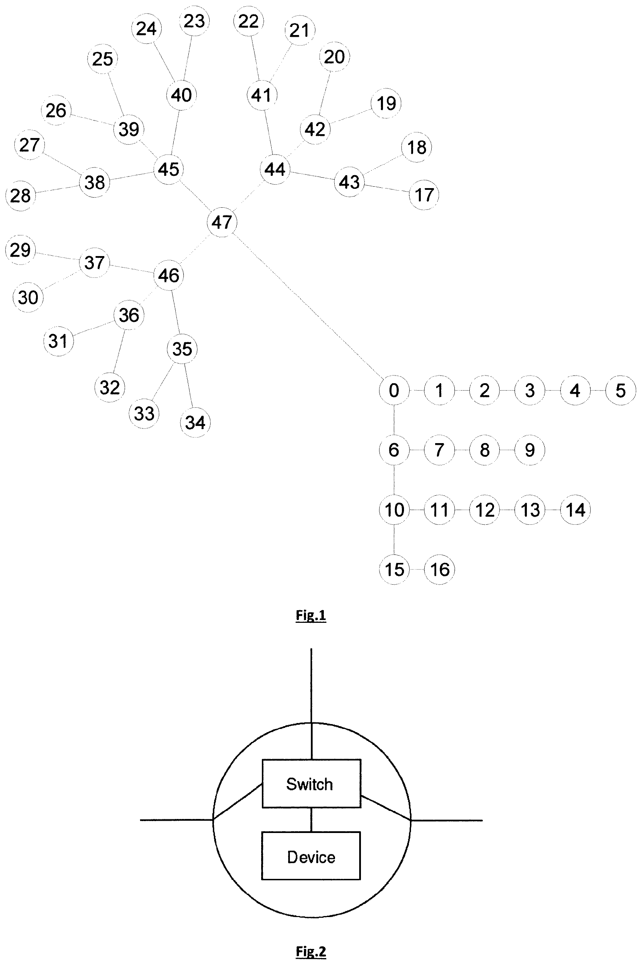

A communication network is considered composed of nodes and links (vertices and edges in graph theory), as illustrated in Fig.1. In communication networks a node is a connection point, either a redistribution point or a communication endpoint (i.e. some terminal equipment). A node can be a server or a client device, it can act as a master or a slave or it can have some controlling function. A port is a point of the node where edges are attached.

Each node contains a device to distribute network traffic between the ports of the node. In a so-called 'active node' the device (that can take the form of a central processing unit (CPU), a micro-controller, a digital signal processor (DSP), a field programmable gate array (FPGA), ...) needs a network address to be able to communicate with it. A so-called 'passive node' has no network address and it is not possible to communicate over the network with it.

Nodes in a network are identified by their address. In some cases it is necessary to know the physical location of nodes when the communication is not only node specific, but also location specific.

The most general implementation of a network topology with point-to-point links is a mesh network. In a mesh network loops are present. Before communication is started in a network where physical loops are present, loops must be disabled to create a loop-free logical topology. In a bridged Ethernet local area network, the RSTP protocol (IEEE 802.1D-2004) can be used therefore, as it uses BPDU frames with a multicast destination MAC address.

In computer networking a network can be partitioned in layers, which can also be interpreted as the well-known logical construct where for example all addressing relevant messages are seen as a "stream" on the physical transmission line, the stream being identifiable based on protocol number/addresses/port numbers for example by the entities in nodes needing to deal with addressing. This is comparable to the data stream versus management stream in a router network, the management stream being addressed to the routers for e.g. management purposes and not to the end-users.
Another example is the partitioning of a single layer-2 network to create multiple distinct broadcast domains, which are mutually isolated so that packets can only pass between domains via routers. Such a domain is referred to as a Virtual Local Area Network, Virtual LAN or VLAN.

One type of computer network considered here is the Ethernet/IP network type. A redistribution point then comprises at least an Ethernet Layer-2 switch to distribute the network traffic. An active node contains at least a 3-port Ethernet Layer-2 switch to connect its links. In Fig.2 the embedded control unit is via an embedded link also connected to the switch.

The protocol most commonly used today in configuring VLANs is IEEE 802.1Q. Here, a 4-byte tag is added to the Ethernet packets that contains an ID and a priority level.

Information on the network topology is commonly obtained via the *Link Layer Discovery Protocol* (LLDP), as defined in IEEE 802.1AB. In case the layout is fixed, this info can also be derived from a complete map (containing all nodes, edges and their connections) of the physical network.

IP addresses are typically distributed via the dynamic host configuration protocol (DHCP) by a DHCP server, but the address received (by a client) is arbitrary. A common solution to couple an IP address with the location is to use device specific information as the MAC address and network topology information containing for each node the MAC address. However, to implement such solution a manual intervention is needed for each installation and for each repair (i.e. device replacement) because the MAC address must be coupled with the location in a database used by the DHCP server.

In the art also automatic solutions exist to couple the IP address with the location. For example, *Media Endpoint Discovery* is an enhancement of LLDP, known as LLDP-MED (ANSI/TIA-1057), that provides amongst other things device location discovery. Another solution is DHCP Option 82, which provides a mechanism for generating IP addresses based on the location the client device is in the network.

However, all these automatic solutions suffer from the drawback that they need a processor to run a software algorithm and a full TCP/IP stack at the client devices. A hardware solution is not possible.

Patent publication US2010/274945 discloses a solution for automatic self-addressing of wired network nodes and optionally also self-termination. Upon receipt of an address command, a first node assigns itself a first address, closes a switch to activate an output port of the first node to enable a second node to receive communications from the first node, and sends a second address onto a two-way communication bus. The second address is received by all previously addressed nodes, including a controller if used, as well as the second node, which is as yet unaddressed. Upon receipt of the second address, the second node repeats the process. If a node does not receive an acknowledgement that a subsequent node has addressed itself, that node deactivates its output port and terminates the network.

Hence, there is a need for a simple mechanism to distribute network addresses to uninitialized network nodes based on the node location. Further a mechanism simple enough to implement in hardware is desirable, whereby the network of already initialized nodes is not disturbed and whereby, for ease of installation and maintenance, device specific information is not be used to determine the node location.

### Summary of the invention

The invention is carried out according to the appended independent claims. Optional features of the invention are carried out according to the dependent claims. It is an object of embodiments of the present invention to provide for a method for a controller node to distribute network addresses to non-initialized nodes, based on the location of the node, whereby the use of device specific information is avoided, the method being simple enough to be implemented in hardware, whereby the network of already initialized network nodes is not disturbed.

The above objective is accomplished by the solution according to the present invention.

With the above approach the aim of presenting a simple mechanism for distributing location-based network addresses is indeed achieved. As the ports of the non-initialised node is initially so configured that they form an end point for information related to the distribution of network addresses and that they let pass other traffic, one can make sure that there is each time only one node available in the network to which the network address contained in the network initialisation information can be assigned. This method is only based on adapting the transmit/receive port status. In the art electronic networking components exist that can adapt their port status easily. So each node only requires the intelligence to accept an address over the network and to accept a port-status-change command, which keeps the proposed solution simple.

Once the node, via one of its network ports acting as input port, has obtained a network address, it moves from non-initialised to initialised state and the network port configuration of said port acting as input port is adapted so that it becomes a bidirectional port on the dedicated network layer. Also another network port of an initialized node (i.e. the node that has just been initialised or, for example in case an end node is reached, any other network node that was already initialised before, including the controller node) is selected_(by the controller or by some other mechanism known to the controller, depending on the order one wants to follow) to be a bidirectional port on the dedicated network layer. From then on network information for initialising a next network node can pass said port of the node that has just been selected. This way, by initializing the nodes one by one and by each time enabling another port of a known selected node, the controller node knows the relative location of each node, hence the solution is 'location-based'.

For initialization a dedicated network layer is used. Other data, next to initialization data, can pass 'normally', as designed in the considered network. So a node that is for example re-powered, will start its process to get a location based address, but its ports will only terminate initialization data and not 'normal' data passing through to other nodes.

The above-described solution overcomes several drawbacks and limitations encountered in prior art documents like US2010/274945. The latter disclosure only holds for multi-drop networks, for example also Ethernet CSMA/CD. The physical network layout is also a point-to-point network, but logically used as multi-drop. On the contrary, the method of this invention is valid for any point-to-point network. US2010/274945 further has the drawback that the initialization disturbs the normal communication because communication to node *i+1* is only possible after node *i* has enabled its output port connected to node *i+1.* Another drawback is that any node starting again with the initialization (e.g. because it had a power loss or a reset) disconnects the networks behind it and only the network part between the node and the controller stays intact. Further, a second address is determined based on the first address. The addressing in the present invention is completely arbitrary : all addresses can be independent. Furthermore, with the approach of this invention, the network can contain nodes that do not need initialization (because they have e.g. a fixed address, or no address, ...), as normal network data is not disturbed by the initialization process.

In a preferred embodiment the method steps are performed repeatedly for a plurality of non-initialised nodes belonging to said plurality of network nodes.

In an advantageous embodiment more than one node of the plurality of nodes acts as controller node. In that case the nodes preferably make use of more than one dedicated network control layer.

In a preferred embodiment the network initialisation information comprises identification tags indicating said dedicated network layer.

In another embodiment the mesh network is a part of a bigger network comprising a plurality of mesh networks.

Advantageously, the mesh network is an Ethernet network and the dedicated network layer applies IEEE 802.1Q VLAN tags.

In a preferred embodiment information on the relative position of the node in initialised state coupled with the location based network address is combined with a map of the mesh network, so that information on the absolute position of said node is obtained.

In another aspect the invention relates to a system comprising a plurality of nodes configured in a mesh network, said mesh network being provided with a dedicated loop-free network layer for conveying network initialisation data concerning network addressing, wherein at least one node of said plurality is arranged to act as a controller node and to distribute location-based network addresses. The plurality of nodes further comprises at least one network node arranged to have at least one network port on the dedicated network layer configured to form an end point for said network initialisation data received from the controller node via the dedicated network layer and arranged to have at least one port on at least one other network layer configured to pass network traffic different from said network initialisation data. The controller node is arranged for assigning the location based network address to said network node via a first port, thereby bringing said network node in initialised state, and for adapting on the dedicated network layer the port configuration of the first port and of a second port, said second port belonging to said initialised node or to a network node that already has been initialised previously, whereby the first port and the second port are configured as bidirectional ports, so that later network initialisation data can pass bidirectionally through the ports.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a mesh network.
Fig.2 illustrates a node with an intelligent device inside connected to a switching device.
Fig.3 illustrates a network node comprising a switching device adapted to route traffic.
Fig.4 up to Fig.11 are a part of Fig. 1 and illustrate step-by-step the method according to the invention.
Fig.12 illustrates an embedded device connected to an Ethernet switch with an implementation of the method according to the invention using IEEE 802.1Q VLANs.
Fig.13 represents the mesh network of Fig.1, wherein a part of the network is treated as a black box, or where the devices inside the black box are passive nodes that do not need a network address.
Fig.14 represents a mesh network where the RSTP protocol has been applied.
Fig.15 represents a mesh network, after RSTP, where the method according to the invention has been applied.
Fig.16 represents a node with two clients inside.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In order to apply the present invention a wide variety of possible network implementations is available. Any network configuration that meets the following constraints is suitable for implementing the invention. It must be possible to adapt the network nodes for enabling/disabling separately the receive and transmit parts of a node port on a specific network layer. An active node can be addressed over the network to adapt node ports, but a passive node needs a direct intervention to adapt its node ports. Further, a passive node that cannot adapt its node ports should have only two ports (e.g. a repeater). The network can have any topology, a mesh being the most general one. Of course measures may need to be taken in order to disable loops, as is mandatory to have a practical mesh. In other words, it is not allowed that nodes pass, switch, route or transmit all received data always, without any restriction to all output ports. The applied method to avoid loops is not important here. The logical addresses assigned with the method of the invention should not be needed for the loop avoidance protocol and further there are no restrictions. The plurality of nodes in the network is basically split in two categories for the invention. At least one node is taken to act as controller node. The controller node can be any node in the mesh network. The other category comprises all other nodes, hence all nodes not acting as controller. Those nodes, or at least a part of them, need to be assigned a network address.

One of ordinary skill in the art will understand that a defect node (if - as often the case in the art - the node has a bypass relay for the physical network) cannot be detected directly. The number of defect nodes can however be identified by simply counting the number of nodes while they are being initialized, so still avoiding the use of device specific information. Another solution to find faulty nodes is to give the server node topology information, like e.g. the number of edges of a node or the number of clients a certain part of the network has. When after initialization the number of nodes found does not match with the topology information, the server knows the number of faulty nodes and can react accordingly. For example an alert can be raised to inform that correct location based addressing is not possible.

So if there are no faulty nodes, the addresses can be one-to-one matched to a map (containing all nodes, edges and their connections). This way the relative position becomes an absolute position.

The controller node can assign addresses that reflect the location (see further example 1), or it can use some device specific information as node identification coupled with the assigned address to determine the location (see further example 4). Anyhow, there is no need to have the device specific information of all nodes beforehand to do the localisation as often done in the prior art.

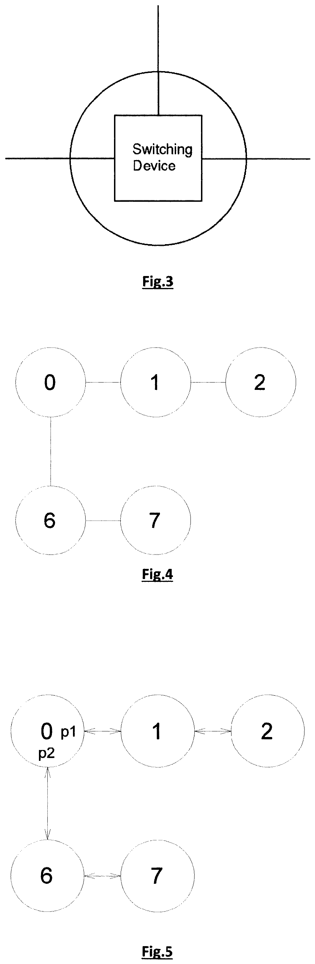

One advantageous option is an Ethernet/IP network. However, in one embodiment of the invention the network can be an RS485 network where each node is a device that routes all traffic, as illustrated in Fig.3. The initialisation data are distinguishable from all other data, e.g. by a special reserved address and this special reserved address creates a virtual control layer. A non-initialized node does not route initialization data (i.e. does not let it pass through), but all other data is routed as normal. This way only the non-initialised node directly connected to the controller or connected via previously initialized nodes can receive the initialization data.

### Example 1 : initialization

The method generally works by activating the receive and transmit part of the ports separately for initialization data. Normal (i.e. non-initialisation) data can pass all ports in all directions (as defined by the network administrator). To explain the method of the invention, a small part of Fig.1 will be used in the next paragraphs. This small part is repeated as Fig.4.

The initialisation protocol is not relevant here. A so called 'master-server' can take the initiative by broadcasting an "init request". Alternatively, the client can broadcast such an 'init request' (as in Ethernet/IP DHCP) to a so called 'slave-server'. The latter approach using DHCP is adopted in the explanation below.

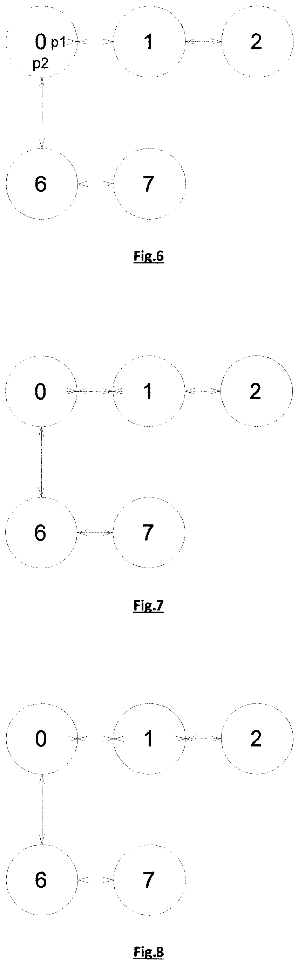

During the initialisation process, i.e. when the nodes have not received an address yet, the non-initialised redistribution point nodes (clients and server) configure their ports such that initialization data - DHCP messages - can only enter the node. See the arrows in Fig.5 representing the flow of initialization data. Note that nodes in Fig.5 can only receive initialization data and cannot pass that information to other nodes. This is represented in Fig.5 by arrows indicating the direction of travel of the initialization data. In other words, the initialization data is 'trapped' in the nodes. This can be achieved by decoding the IP headers of the messages: all UDP packets using ports numbers 67 and 68 belong to the initialization "stream". All client nodes send out a DHCP-Discover broadcast message as initialization request. The server node (node 0 in Fig. 5) runs a modified DHCP server, selects port 1 (p1) and activates it to be able to send out a DHCP-Offer broadcast message, see the arrow inside the node in Fig.6 to node 1.

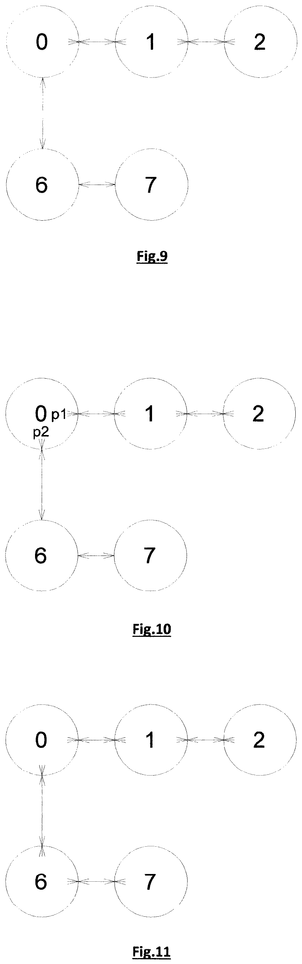

So the server can only initialize (i.e. attribute an address to) the physically first non-initialised redistribution point client, such that the server knows the physical location of that redistribution point client, node 1 in Fig.6. Once node 1 in Fig.6 has received an address via the DHCP Discover-Offer-Request-Acknowledge cycle, the server can communicate with it via unicast messages and the server activates (or lets the node activate itself) two ports of node 1 for passing initialization data : the port connected to the server (Fig.7) and the port connected to node 2 (Fig.8). Now initialization data can reach node 2. That node 2 is the next one to be initialized and have its ports activated (Fig.9). Node 2 is a communication endpoint client, so the end of the chain from the controller is reached. Then the controller selects its port 2 (p2) to activate in order to be able to send out initialization data, see in Fig.10 the arrow inside node 0 towards node 6. In the same way nodes 6 and 7 are initialized. Fig. 11 shows the resulting situation on the dedicated network layer after initialization of nodes 6 and 7.

### Example 2: a chain of digital signage displays

Imagine that in Example 1 (Fig.4) all clients are LCD displays in a train restaurant car to show the four available menus. During initialization, all displays are configured with the same static IP address. A welcome screen with the basic menu is sent to that static IP address, so to all displays. After initialization, one wants the four menus to be shown in the correct order, the cheapest first. So menu 1 is sent to the now correct address of Node 1, ..., and menu 4 to Node 7.

There are several ways to detect nodes that crash or reboot, or to detect newly added nodes (to be able to initialize them). The server can keep a list of already initialized clients and check regularly whether they are alive. The master-server can transmit regularly alive requests (and wait for acknowledgements) - the slave-server just has to wait for status update messages from the clients. In this DHCP example a booting client will automatically show again the welcome screen, because the server also keeps sending that data.

To find the absolute position, a database is needed to link the relative position with the absolute position. The database can also contain extra information of the localized device (e.g. colour, size ...). In this railway example, it is interesting to know also the absolute position: the first display at the right side displays "exit at this side" when in the current station the platform is at the right side. For the menus only the relative position is important. For the "exit at this side" message the exact position is important.

### Example 3 : simple hardware solution for an Ethernet/IP daisy chain

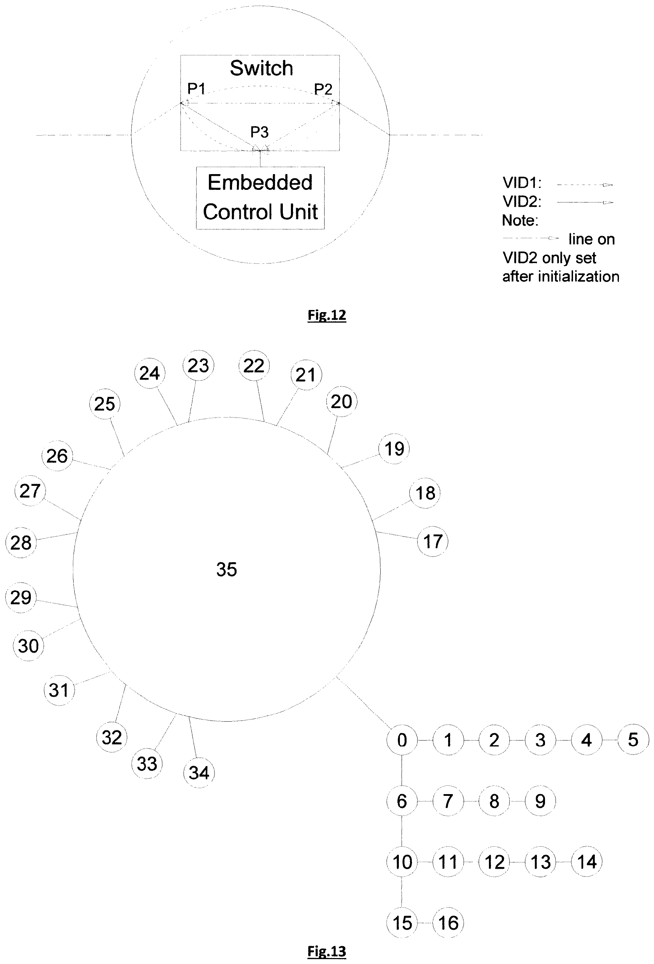

In an Ethernet/IP based embodiment of the present invention, the switch embedded in a redistribution point is a so-called "managed switch": it must be possible to configure (IEEE802.1Q) Virtual Local Area Networks (VLANs) on the switch. In the simplest case the managed switch is embedded in the network node just to daisy chain the network nodes (see Fig.1 nodes 1 to 5 for a daisy chain example), in the most complex case the client is actually a switch/router that also needs an IP address (see Fig.13, node 35).

The proposed solution does not use a complex algorithm at the network nodes that need initialisation. The solution can for example be implemented with an FPGA attached to an Ethernet switch. The proposed solution makes Safety Integrity Level 2 (SIL2) certification possible because it is simple enough to be implemented without a micro-controller running a TCP/IP stack which is very difficult to certificate.

In a practical example the method is used to initialize clients in a daisy chain. P1 and P2 are external ports used in the daisy chain (see Fig. 12), P3 is connected internally to the client's control unit; VIDi is there VID2, VID1 is the default VLAN for normal traffic (i.e. traffic not related to initialisation).

### Initialisation configuration

For initialization purposes a separate 802.1Q VLAN ID (VID) 2 is chosen.
- P1 and P2 mark (but do not force) ingress packets with VID2 (this is a virtual tag, not yet a physical VLAN)
- P3 uses the default VID1 tag at ingress (packets from control unit).
- Only the control unit P3 will be a (egress) member of this VID2.
- All ports have 802.1Q enabled (secure)
- All ports (P1,2,3) will be member of VID1 (default VLAN).
- Ports (P1,2) will egress tagged.
- P3 egresses untagged (the embedded control unit itself does not need to take care of VLAN tags)

This means that all untagged (or VID2 tagged) packets ingressing a client receive VID2 and are sent only to the client's embedded control unit. VID1 tagged packets can pass all ports.

Packets sent by the embedded control unit during the initialization process are unicast packets to the server and can use VID1.

The server can transmit untagged packets or VID2 tagged packets to reach only the first client. The server can transmit packets tagged with VID1 to travel over the chain. If the server cannot add VLAN tags itself, it configures its own embedded switch to add VID2 tags to packets egressing the server during initialization time and to add VID1 tags after initialization.

### Initialization process

The so called 'master-server' takes the initiative by broadcasting a "status request" e.g. every second. To keep it simple all initialization messages use ARP packets (with different message types, see RFC 826 and 903). This example uses the subnet 10.0.0.0/24. The status request is an ARP request asking 'who has 10.0.0.255'. Normally nobody answers this broadcast address. However, the clients' FPGA can be easily programmed to answer such an ARP request:
- in case it is not yet initialized: by a RARP request: "I have this MAC address, please give me an IP address". The server then answers with a RARP reply.
- in case it is already initialized: by a ARP reply: "here my IP address".

### Normal traffic

When a device is initialized the 802.1Q VLAN settings of the switch are adapted : all ports will become member of VID2.
- P3 ingressing (control unit) packets are marked with VID1 and egress P1/2 tagged;
- tagged P1/2 ingressing packets keep their VLAN and
   ∘ only VID=1,2 packets can egress all other ports,
   ∘ packets with another VID are discarded;
- untagged P1/2 ingressing packets are marked with VID2 and can egress P3 untagged and P2/1 tagged with VID2.

So the next device in the daisy chain can be addressed. The VLAN settings also allow a minimal intervention of the embedded control unit. It only needs to configure the switch. The routing is handled by the switch.

Thanks to the default VID1, a client performing a reset does not interrupt the normal Ethernet communication (between Server and the client further on) because that runs on VID1.

If the server wants to reach all devices, it should use VID1. If it wants to reach the first non-initialized device, it should use VID2 or use untagged packets.

### Example 4: addressing and localization decoupled

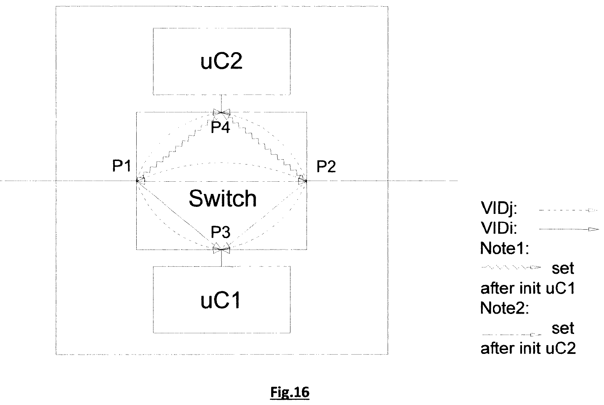

Alternatively, the proposed solution can also be implemented using a small micro-controller (uC) running a small, possibly embedded, TCP/IP stack with DHCP (which is standard practice in embedded operating systems) for the address assignment and a standard Ethernet switch for the localisation, see Fig. 16, with 2 uCs.

One advantageous embodiment of the method according to the invention decouples the addressing from the localisation. In an Ethernet/IP network the addressing is then handled by a standard DHCP server. The localisation protocol is run when needed applying the method described above, and gathers in the correct order (relative position) the MAC addresses of the nodes. This ordered list of MAC addresses is then used to create/update the static leases table commonly used in a DHCP server. Whenever the list changes, a DHCP-force-renew message can be transmitted.

The protocol checks the layout of the sub-network of clients needing a location-based address by sending a command (ping) to each client one-by-one and waiting for the answer (pong) using VIDi (the initialization VLAN). The result is the static leases information written to a file as backup for the next boot and written to RAM as input for the addressing protocol (DHCP server).

A client contains an embedded switch where several micro-controllers (uC) can be connected. In a client only one uC can be connected to the SMI bus of the embedded switch (serial bus for register access). That uC is called the master client and the others the slave clients. Only the master client can change the switch VLAN settings.

Then the following commands are needed:
1. reset
2. initialize master,
3. go-to next slave (of the same client),
4. initialize slave,
5. go-to next master (of the next client in the same chain),
6. go-to next chain (a branch in the current chain)

A protocol iteration contains these steps:
1. Server broadcasts a reset command (such that only the first non-initialized client in the chain can receive the ping). Wait for at least 1 answer.
2. Server sends a ping
   a. 'initialize master' or 'initialize slave', and
   b. 'go-to next slave', 'go-to next master' or 'go-to next chain' (depending on the sub-network layout).
3. Client sends back a pong. Only the first client should answer. That client must change the VLAN settings to allow the next client to receive the next ping. When receiving the command from the server, the client
   a. reads the current VLAN configuration out of the switch.
   b. knows the possible configurations: (a) initial, (b) uC1 initialized, (c) uC2 initialized, ....
   c. changes to the next configuration.
   d. sends an ACK back to the server indicating the configuration change done.
4. Server sends ping number i. Client number i must change the VLAN settings to allow the next client to receive the next ping. Exactly i clients should answer with a pong, else start again (reset command). This is done for all clients listed in the blueprint file (digital version of a map).
5. Write or update the static leases file. If something has changed, send out a force renew DHCP packet.

### Example 5: a mesh in an Ethernet/IP network using STP

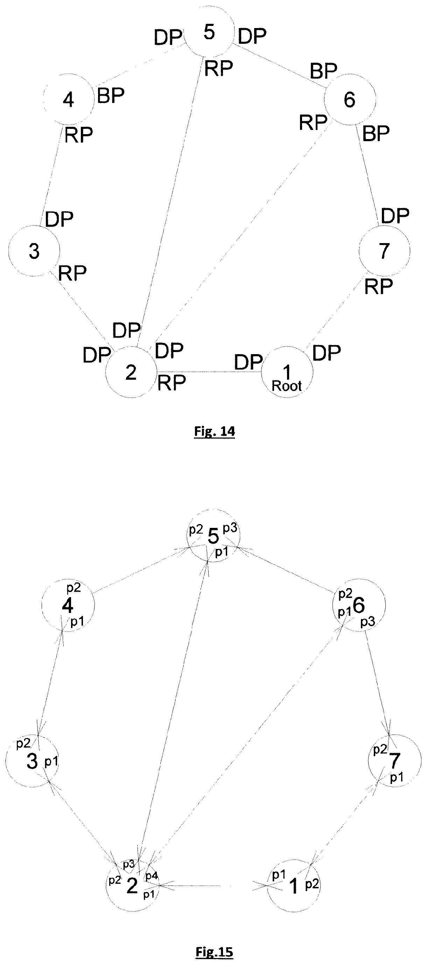

In a mesh, when the switch nodes boot, the switch does not immediately start forwarding data. Instead it goes through the states of the STP protocol (see IEEE 802.1D). Fig.14 shows the result of the STP protocol : Root Ports (RP) and Designated Ports (DP) are ports put in forwarding mode, Blocked Ports (BP) are ports that block all data both for input and output. Now the method of the invention can be applied, see Fig.15 where all ports except the Blocked Ports contain the same receive and transmit arrows as used in example 1:
1. Let the root node (1) be the server node. Initially, or because of a reset command, only the receive arrows are present.
2. Then the server selects and enables its port 1 (p1) for bidirectional communication, and sends out a ping specifying address "2" and 'go-to next'.
3. Node 2 activates p1 and p2 for transmitting and pongs to the server 'next master on p2'.
4. Then the server sends out a ping specifying address "3" and 'go-to next'.
5. Node 3 activates p1 and p2 for transmitting and pongs to the server 'next master on p2; no more ports'.
6. Then the server sends out a ping specifying address "4" and 'go-to next'.
7. Node 4 activates p1 for transmitting and pongs to the server 'next master on blocked p2; no more ports'.
8. Then the server sends out a ping to node 2 'go-to next'.
9. Node 2 activates p3 for transmitting and pongs to the server 'next master on p3'.
10. Then the server sends out a ping specifying address "5" and 'go-to next'.
11. Node 5 activates p1 and p2 for transmitting and pongs to the server 'next master on p2'.
12. Then the server sends out a ping specifying address "6" and 'go-to next'.
13. After the timeout the server sends out a ping to node 5 'go-to next'.
14. Node 5 activates p3 for transmitting and pongs to the server 'next master on p3; no more ports'.
15. Then the server sends out a ping specifying address "6" and 'go-to next'.
16. After the timeout the server sends out a ping to node 2 'go-to next'.
17. Node 2 activates p4 for transmitting and pongs to the server 'next master on p4; no more ports'.
18. Then the server sends out a ping specifying address "6" and 'go-to next'.
19. Node 6 activates p1 for transmitting and pongs to the server 'next master on blocked p2'.
20. Then the server sends out a ping to node 6 'go-to next'.
21. Node 6 pongs to the server 'next master on blocked p3; no more ports'.
22. Then the server selects and enables its p2 and sends out a ping specifying address "7", and 'go-to next'.
23. Node 7 activates p1 and p2 for transmitting and pongs to the server 'next master on p2'.
24. Then the server sends out a ping specifying address "8" and 'go-to next'.
25. After the timeout the server knows all seven client nodes have been initialized. He also knows the relative position of all nodes. If the server knows that the number of clients is 7, he knows that the initialization process was correct. If the server has a map of the network, Fig. 15, he also knows the absolute position: node 4 and 5 are connected via a blocked port; node 7 is above it; node 2 at the left; there is an outer ring over nodes 1, 2, 3, 4, 5, 6, 7; ...

### Example 6: hop-first or chain-first initialization in Fig.1

Let node 47 in Fig.1 be the server. It then has two ways to initialize the clients:
1. hop-by-hop: a hop is the relative distance measure. Nodes 44, 45, 46 are at 1 hop distance and are initialized first in this case. Nodes 35 -> 43 are at 2 hops distance and are initialized next, and finally nodes 17 -> 34 at 3 hops distance are initialized. This order reflects the relative position or distance from the server.
2. chain-first: in this case first nodes 44, 43 and 17 (in this order) are initialized. Then node 18, then nodes 42, 19 and so on. Finally node 30 is initialized.

The network can also contain hierarchy: if in Fig.1 nodes 35 to 47 would be passive nodes or active nodes that already are initialized (in one way or another), then the network of Fig.1 can be simplified to Fig.13 : during initialization of nodes 17 to 34, the server activates (for transmission of initialization data) one by one the ports where those communication endpoint clients are connected to the server, and then initializes that communication endpoint client based on its location, see Fig.13 for client 35.

### Example 7: fail-safe implementation

For a fail-safe implementation for an Ethernet/IP network, the server must have a blueprint of the network. When assigning addresses, the server stores the MAC address of each device. The server uses some polling mechanism to check the network against changes.

When a node resets, for example node 44 in Fig.1, the server node can still communicate with nodes 41 -> 43 and 17 -> 22. However, an initialization message will only reach node 44 and not the nodes behind. The server can know node 44 has reset, if the server has for example stored the MAC address (in case of an Ethernet/IP network) of node 44 when initializing it for the first time.

When defect nodes have been repaired, the server receives initialization requests from unknown nodes. Because the configuration has changed, the server sends out the reset message to restart the initialization phase. If only 1 node is repaired, the server can of course identify it.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for assigning with a controller node a location-based network address to a non-initialised network node forming an end node for network initialisation data concerning network addressing, said controller node and said non-initialised network node belonging to a plurality of nodes in a mesh network having at least two layers, said mesh network being provided with a dedicated loop-free network layer for conveying said network initialisation data, said non-initialised network node having at least one port on said dedicated network layer configured so as to form an end point for said network initialisation data received from said controller node on said dedicated loop-free network layer and said non-initialised network node having at least one port on at least one other network layer configured to pass network traffic different from said network initialisation data, the method comprising the steps of :
- selecting on said controller node a port connected to said non-initialised network node to send out said network initialisation data concerning network addressing,
- assigning said location based network address to said non-initialised network node via a first port of said non-initialised network node configured so as to form an end point for said network initialisation data, thereby bringing said node in initialised state,
- adapting on said dedicated network layer the port configuration of said first port of said initialized network node and the port configuration of a second port, said second port belonging to said initialized network node or to another initialized node of said mesh network, whereby said first port and said second port are configured as bidirectional ports, so that later network initialisation data can pass bidirectionally through said ports.

2. Method for assigning as in claim 1, wherein the method steps are performed repeatedly for a plurality of network nodes belonging to said plurality of nodes in said mesh network.

3. Method for assigning as in any of the previous claims, wherein more than one node of said plurality of nodes acts as controller node.

4. Method for assigning as in claim 3, wherein said more than one node use more than one dedicated network layer.

5. Method for assigning as in any of claims 1 to 4, wherein said network initialisation data comprises identification tags indicating said dedicated network layer.

6. Method for assigning as in any of the previous claims, wherein said mesh network is a part of a bigger network comprising a plurality of mesh networks.

7. Method for assigning as in any of the previous claims, wherein information on the relative position of said node in initialised state coupled with said location based network address is combined with a map of said mesh network, so that information on the absolute position of said node in initialised state is obtained.

8. Method for assigning as in any of the previous claims, wherein said mesh network is an Ethernet network and said dedicated network layer applies IEEE 802.1Q VLAN tags.

9. System comprising a plurality of nodes in a mesh network having at least two layers, said mesh network being provided with a loop-free network layer dedicated for initialisation purposes, wherein at least one node of said plurality is arranged to act as a controller node and to distribute location-based network addresses and wherein said plurality of nodes further comprises at least one non-initialised client node arranged to have at least one network port configured to form an end point for network initialisation data concerning network addressing received from said controller node via said dedicated network layer and configured to pass network traffic different from said network initialisation data, wherein said controller node is arranged for selecting a port connected to said non-initialised network node to send out said network initialisation data concerning network addressing, and for assigning said location based network address to said non-initialised node forming an end node for network initialisation data concerning network addressing via a first port of said non-initialised node, thereby bringing said node in initialised state, and for adapting the network port configuration of said first port and the network port configuration of a second port, said second port belonging to said node in initialised state or to another initialized node of said mesh network, whereby said first port and said second port are configured as bidirectional ports, so that later network initialisation data can pass bidirectionally through said ports.

## Patentansprüche

1. Verfahren zur Zuteilung mit einem Steuerungsknoten einer standortbasierten Netzwerkadresse zu einem nicht initialisierten Netzwerkknoten, der einen Endknoten für Netzwerkinitialisierungsdaten die Netzwerkadressierung betreffend bildet, wobei der Steuerungsknoten und der besagte nicht initialisierte Netzwerkknoten zu einer Vielzahl von Knoten in einem Mesh-Netzwerk gehören, welches zumindest zwei Schichten aufweist, wobei das besagte Mesh-Netzwerk mit einer bestimmten schleifenlosen Netzwerkschicht zum Fördern der besagten Netzwerkinitialisierungsdaten bereitgestellt wird, wobei der besagte nicht initialisierte Netzwerkknoten zumindest einen Port in der besagten bestimmten Netzwerkschicht aufweist, der konfiguriert ist, um einen Endpunkt für die besagten Netzwerkinitialisierungsdaten zu bilden, die vom besagten Steuerungsknoten in der besagten bestimmten schleifenlosen Netzwerkschicht empfangen werden, und der besagte nicht initialisierte Netzwerkknoten zumindest einen Port in zumindest einer anderen Netzwerkschicht aufweist, der konfiguriert ist, um Netzwerktrafik weiterzugeben, der sich von den besagten Netzwerkinitialisierungsdaten unterscheidet, wobei das Verfahren die folgenden Schritte umfasst:
- Auswahl am besagten Steuerungsknoten eines Ports, der mit dem besagten nicht initialisierten Netzwerkknoten verbunden ist, um die besagten Netzwerkinitialisierungsdaten die Netzwerkadressierung betreffend auszusenden,
- Zuteilen der besagten standortbasierten Netzwerkadresse zum besagten nicht initialisierten Netzwerkknoten über einen ersten Port des besagten nicht initialisierten Netzwerkknotens, der konfiguriert ist, um einen Endpunkt für die besagten Netzwerkinitialisierungsdaten zu bilden, wodurch der besagte Knoten in den initialisierten Zustand gebracht wird,
- Anpassen, auf der besagten bestimmten Netzwerkschicht, der Portkonfiguration des besagten ersten Ports des besagten initialisierten Netzwerkknotens und der Portkonfiguration eines zweiten Ports, wobei der besagte zweite Port zum besagten initialisierten Netzwerkknoten oder zu einem anderen initialisierten Knoten des besagten Mesh-Netzwerks gehört, wobei der besagte erste Port und der besagte zweite Port als bidirektionale Ports konfiguriert sind, sodass spätere Netzwerkinitialisierungsdaten bidirektional durch die besagten Ports weitergegeben werden können.

2. Verfahren zur Zuteilung nach Anspruch 1, wobei die Verfahrensschritte wiederholt für eine Vielzahl von Netzwerkknoten durchgeführt werden, die zur besagten Vielzahl von Knoten im besagten Mesh-Netzwerk gehören.

3. Verfahren zur Zuteilung nach irgendeinem der vorhergehenden Ansprüche, wobei mehr als ein Knoten aus der besagten Vielzahl von Knoten als Steuerungsknoten agiert.

4. Verfahren zur Zuteilung nach Anspruch 3, wobei der besagte mehr als eine Knoten mehr als eine bestimmte Netzwerkschicht verwendet.

5. Verfahren zur Zuteilung nach irgendeinem der Ansprüche 1 bis 4, wobei die besagten Netzwerkinitialisierungsdaten Identifizierungskennzeichen umfassen, die auf die besagte bestimmte Netzwerkschicht hinweisen.

6. Verfahren zur Zuteilung nach irgendeinem der vorhergehenden Ansprüche, wobei das besagte Mesh-Netzwerk ein Teil eines größeren Netzwerks, eine Vielzahl von Mesh-Netzwerken umfassend, ist.

7. Verfahren zur Zuteilung nach irgendeinem der vorhergehenden Ansprüche, wobei Information über die relative Position des besagten Knotens im initialisierten Zustand, verbunden mit der besagten standortbasierten Netzwerkadresse mit einer Karte des besagten Mesh-Netzwerks kombiniert wird, sodass man Information über die absolute Position des besagten Knotens im initialisierten Zustand erhält.

8. Verfahren zur Zuteilung nach irgendeinem der vorhergehenden Ansprüche, wobei das besagte Mesh-Netzwerk ein Ethernet-Netzwerk ist und die besagte bestimmte Netzwerkschicht IEEE 802.1Q VLAN Kennzeichen anwendet.

9. System, eine Vielzahl von Knoten in einem Mesh-Netzwerk umfassend, welche zumindest zwei Schichten aufweisen, wobei das besagte Mesh-Netzwerk mit einer schleifenlosen Netzwerkschicht bereitgestellt wird, die zu Initialisierungszwecken bestimmt ist, wobei zumindest ein Knoten aus der besagten Vielzahl angeordnet ist, um als Steuerungsknoten zu agieren, und standortbasierte Netzwerkadressen zu verteilen, und wobei die besagte Vielzahl von Knoten darüber hinaus zumindest einen nicht initialisierten Client-Knoten umfasst, der angeordnet ist, um zumindest einen Netzwerk-Port aufzuweisen, der konfiguriert ist, um einen Endpunkt für Netzwerkinitialisierungsdaten die Netzwerkadressierung betreffend zu bilden, die vom besagten Steuerungskoten über die besagte bestimmte Netzwerkschicht empfangen werden, und konfiguriert, um Netzwerktrafik weiterzugeben, der sich von den besagten Netzwerkinitialisierungsdaten unterscheidet, wobei der besagte Steuerungsknoten angeordnet ist, um einen Port auszuwählen, der mit dem besagten nicht initialisierten Netzwerkknoten verbunden ist, um die besagten Netzwerkinitialisierungsdaten die Netzwerkadressierung betreffend auszusenden, und um die besagte standortbasierte Netzwerkadresse zum besagten nicht initialisierten Knoten zuzuteilen, der einen Endknoten für Netzwerkinitialisierungsdaten die Netzwerkadressierung betreffend über einen ersten Port des besagten nicht initialisierten Knotens bildet, wobei der besagte Knoten in einen initialisierten Zustand gebracht wird, und um die Netzwerk-Portkonfiguration des besagten ersten Ports und die Netzwerk-Portkonfiguration eines zweiten Ports anzupassen, wobei der besagte zweite Port zum besagten Knoten im initialisierten Zustand oder zu einem anderen initialisierten Knoten des besagten Mesh-Netzwerks gehört, wobei der besagte erste Port und der besagte zweite Port als bidirektionale Ports konfiguriert sind, sodass spätere Netzwerkinitialisierungsdaten bidirektional durch die besagten Ports weitergegeben werden können.

## Revendications

1. Procédé d'assignation, avec un noeud d'organe de commande, d'une adresse de réseau sur la base d'un emplacement à un noeud de réseau non initialisé constituant un noeud d'extrémité pour des données d'initialisation de réseau concernant un adressage de réseau, ledit noeud d'organe de commande et ledit noeud de réseau non initialisé appartenant à une pluralité de noeuds dans un réseau maillé comportant au moins deux couches, ledit réseau maillé étant pourvu d'une couche de réseau sans boucle dédiée pour transporter lesdites données d'initialisation de réseau, ledit noeud de réseau non initialisé comportant au moins un port sur ladite couche de réseau dédiée configuré pour constituer un point d'extrémité pour lesdites données d'initialisation de réseau reçues en provenance dudit noeud d'organe de commande sur ladite couche de réseau sans boucle dédiée et ledit noeud de réseau non initialisé comportant au moins un port sur au moins une autre couche de réseau configuré pour laisser passer un trafic de réseau différent desdites données d'initialisation de réseau, le procédé comprenant les étapes de :
- la sélection, sur ledit noeud d'organe de commande, d'un port relié au dit noeud de réseau non initialisé pour envoyer lesdites données d'initialisation de réseau concernant un adressage de réseau,
- l'assignation de ladite adresse de réseau sur la base d'un emplacement au dit noeud de réseau non initialisé par l'intermédiaire d'un premier port dudit noeud de réseau non initialisé configuré de manière à constituer un point d'extrémité pour lesdites données d'initialisation de réseau, en mettant de ce fait ledit noeud dans un état initialisé,
- l'adaptation, sur ladite couche de réseau dédiée, de la configuration de port dudit premier port dudit noeud de réseau initialisé et de la configuration de port d'un deuxième port, ledit deuxième port appartenant au dit noeud de réseau initialisé ou à un autre noeud initialisé dudit réseau maillé, de telle manière que ledit premier port et ledit deuxième port soient configurés en tant que ports bidirectionnels, de sorte que des données d'initialisation de réseau ultérieures puissent passer bidirectionnellement à travers lesdits ports.

2. Procédé d'assignation selon la revendication 1, dans lequel les étapes de procédé sont effectuées à répétition pour une pluralité de noeuds de réseau appartenant à ladite pluralité de noeuds dans ledit réseau maillé.

3. Procédé d'assignation selon l'une quelconque des revendications précédentes, dans lequel plusieurs noeuds de ladite pluralité de noeuds agissent en tant que noeud d'organe de commande.

4. Procédé d'assignation selon la revendication 3, dans lequel lesdits plusieurs noeuds utilisent plusieurs couches de réseau dédiées.

5. Procédé d'assignation selon l'une quelconque des revendications 1 à 4, dans lequel lesdites données d'initialisation de réseau comprennent des étiquettes d'identification indiquant ladite couche de réseau dédiée.

6. Procédé d'assignation selon l'une quelconque des revendications précédentes, dans lequel ledit réseau maillé fait partie d'un réseau plus grand comprenant une pluralité de réseaux maillés.

7. Procédé d'assignation selon l'une quelconque des revendications précédentes, dans lequel des informations sur la position relative dudit noeud dans un état initialisé couplé à ladite adresse de réseau sur la base d'un emplacement sont combinées à une carte dudit réseau maillé, de sorte que des informations sur la position absolue dudit noeud dans un état initialisé soient obtenues.

8. Procédé d'assignation selon l'une quelconque des revendications précédentes, dans lequel ledit réseau maillé est un réseau Ethernet et ladite couche de réseau dédiée applique des étiquettes VLAN IEEE 802.1Q.

9. Système comprenant une pluralité de noeuds dans un réseau maillé comportant au moins deux couches, ledit réseau maillé étant pourvu d'une couche de réseau sans boucle dédiée à des fins d'initialisation, dans lequel au moins un noeud de ladite pluralité est agencé pour agir en tant que noeud d'organe de commande et pour distribuer des adresses de réseau sur la base d'un emplacement, et dans lequel ladite pluralité de noeuds comprennent en outre au moins un noeud client non initialisé agencé pour avoir au moins un port de réseau configuré afin de constituer un point d'extrémité pour des données d'initialisation de réseau concernant un adressage de réseau reçu en provenance dudit noeud d'organe de commande par l'intermédiaire de ladite couche de réseau dédiée et configuré pour laisser passer un trafic de réseau différent desdites données d'initialisation de réseau, dans lequel ledit noeud d'organe de commande est agencé pour sélectionner un port relié au dit noeud de réseau non initialisé afin d'envoyer lesdites données d'initialisation de réseau concernant un adressage de réseau, et pour assigner ladite adresse de réseau sur la base d'un emplacement au dit noeud non initialisé constituant un noeud d'extrémité pour des données d'initialisation de réseau concernant un adressage de réseau par l'intermédiaire d'un premier port dudit noeud non initialisé, en mettant de ce fait ledit noeud dans un état initialisé, et pour adapter la configuration de port de réseau dudit premier port et la configuration de port de réseau d'un deuxième port, ledit deuxième port appartenant au dit noeud dans un état initialisé ou à un autre noeud initialisé dudit réseau maillé, de telle manière que ledit premier port et ledit deuxième port soient configurés en tant que ports bidirectionnels, de sorte que des données d'initialisation de réseau ultérieures puissent passer bidirectionnellement à travers lesdits ports.
